# EUROPÄISCHE PATENTSCHRIFT

(11) **EP 0 984 417 B1**
(45) Veröffentlichungstag und Bekanntmachung des Hinweises auf die Patenterteilung: **28.01.2004**
(21) Anmeldenummer: 99115361.0
(22) Anmeldetag: 04.08.1999
(51) Int. Cl.: G08G 1/09, H04H 1/00, G06F 13/40

(54) **Datenspeicher für Fahrzeuge**
Data memory for vehicles
Mémoire de données pour des véhicules

(30) Priorität: 01.09.1998 DE 19839685
(43) Veröffentlichungstag der Anmeldung: 08.03.2000
(73) Patentinhaber: Siemens Aktiengesellschaft, 80333 München (DE)
(72) Erfinder: Tiede, Lutz-Wolfgang, 64832 Babenhausen (DE)

(56) Entgegenhaltungen:
- EP-A- 0 725 502
- EP-A- 0 745 964
- WO-A-94/11802
- DE-A- 19 527 185

## Beschreibung

Die Erfindung betrifft einen Datenspeicher in einem Fahrzeug, der mittels einer Schnittstelle mit einer Empfangseinheit für Funksignale verbunden ist.

Solche Datenspeicher werden bei heutigen Fahrzeugen zunehmend eingesetzt, um dem Fahrer beispielsweise Daten über das aktuelle Verkehrsgeschehen zur Verfügung zu stellen. So ist es heute bereits möglich, die Position des Fahrzeuges aufgrund der empfangenen Daten mit hoher Genauigkeit zu bestimmen und mit digitalisierten Straßenplänen zu vergleichen, so dass der Fahrer zu einem vorbestimmten Fahrziel geleitet werden kann. Die übertragbaren Datenmengen erlauben dabei eine schnelle Verfügbarkeit und sorgen somit für eine erhöhte Fahrsicherheit und gesteigerten Komfort.

Aus der DE-A-195 27 185 ist ein RDS-TMC Rundfunkempfänger bekannt, bei dem aus einer codierten Meldung eine optischund/oder akustischen Informationsausgabe angesteuert wird.

Durch die sprunghafte technische Entwicklung bei den Empfangseinheiten sind eine Vielzahl unterschiedlicher Geräte verfügbar, die jeweils eine spezielle Schnittstelle zur Anbindung an den Datenspeicher erfordern. Zur Übertragung der Signale sind in dem Datenspeicher entsprechende Softwaremodule erforderlich. Nachteilig wirkt sich hierbei aus, dass die Softwaremodule in der Regel nur mit wenigen oder nur einer einzigen Empfangseinheit kompatibel sind, so dass bei dem Datenspeicher ein Vielzahl solcher Softwaremodule vorgesehen werden müssen, sofern eine flexible Anbindung unterschiedlicher Geräte ermöglicht werden soll. Die Auswahl des geeigneten Softwaremodules erfolgt nach der Kontaktierung manuell mit Hilfe eines Konfigurationsmenüs. Der zur Auswahl des entsprechenden Softwaremodules erforderliche Aufwand ist dabei relativ groß, wobei zugleich durch eine falsche Auswahl des Softwaremodules Fehlfunktionen auftreten können.

Aufgabe der vorliegenden Erfindung ist es daher, einen Datenspeicher der vorstehenden Art derart auszuführen, dass eine manuelle Konfiguration einer speziellen Software für die mittels der Schnittstelle angeschlossene Empfangseinheit entfallen kann. Hierbei soll insbesondere eine flexible Anbindung verschiedener Empfangseinheiten und eine besonders einfache Bedienung ermöglicht werden.

Diese Aufgabe wird erfindungsgemäß durch eine Vorrichtung mit den Merkmalen des Anspruchs 1 gelöst. Durch die Speicherung der spezifischen Daten der Empfangseinheit in der Speichereinheit der Schnittstelle erfolgt die Übermittlung der zur Decodierung erforderlichen Daten automatisch durch die Anbindung der Schnittstelle an den Datenspeicher. Dabei ist der Anschluss einer anderen Empfangseinheit zugleich auch mit dem Austausch der Schnittstelle verbunden, so dass eine zusätzliche manuelle Anpassung entfällt. Insbesondere kann dadurch eine fehlerhafte Konfiguration weitgehend ausgeschlossen werden und die Speicherkapazität des Datenspeichers durch Speicherung der Daten in der Speichereinheit der Schnittstelle reduziert werden. Dabei ist zugleich auch eine Verwendung von Empfangseinheiten möglich, die zum Zeitpunkt der erstmaligen Inbetriebnahme des Datenspeichers noch nicht verfügbar waren, da die hierzu erforderlichen Daten mittels der Speichereinheit der Schnittstelle für den Datenspeicher verfügbar sind. Hierdurch lässt sich die Flexibilität erheblich steigern.

Die Schnittstelle könnte spezifische Daten der Empfangseinheit enthalten, die eine Anpassung und Veränderung der in dem Datenspeicher enthaltenen Software bzw. die hierzu erforderlichen Parameter enthalten. Besonders günstig ist hingegen eine Ausführungsform der Erfindung, bei der die Schnittstelle verschiedene Softwaremodule enthält. Hierdurch können die zur Verarbeitung der Daten erforderlichen Softwaremodule weitgehend unabhängig vom Datenspeicher als Bestandteil der Schnittstelle ausgeführt sein. Die Anpassung oder Änderung der Softwaremodule ist daher mit vergleichsweise geringem Aufwand verbunden und die Betriebssicherheit, insbesondere auch durch Anpassung der Softwaremodule an die fortschreitende Entwicklung im Softwarebereich, problemlos möglich.

Eine andere, besonders günstige Ausführungsform der Erfindung ist auch dadurch gegeben, dass die Schnittstelle elektronische Bauelemente aufweist, die zum Abgleich der Signale zwischen Empfangseinheit und Datenspeicher ausgeführt sind. Hierbei erfolgt die Anpassung der Signalpegel mit Hilfe der elektronischen Bauelemente, die dadurch die Decodierung und Weiterverarbeitung mittels der Softwaremodule ermöglicht. Hierdurch lässt sich eine einfache und zugleich kostengünstige Herstellung erreichen.

Besonders vorteilhaft ist auch eine Weiterbildung der Erfindung, bei der die Schnittstelle eine Recheneinheit hat. Dadurch können innerhalb der Schnittstelle mit Hilfe des in der Speichereinheit vorhandenen Softwaremodules die mittels Empfangseinheit erfassten Standardsignale in für den Datenspeicher lesbare Signale umgesetzt werden. Der Datenspeicher wird dadurch von dem Softwaremodul der Empfangseinheit weitgehend unabhängig.

Besonders vielseitig und in der Praxis besonders günstig ist die Erfindung dadurch, daß die Schnittstelle mit einer Steckverbindung ausgestattet ist. Hierdurch können neu hinzukommende Geräte mühelos auch von Laien an den vorhandenen Datenspeicher angeschlossen werden. Zugleich ist durch eine entsprechende Ausprägung der Steckverbindung ein Anschluss lediglich an solche Datenspeicher möglich, die zur Anbindung der jeweiligen Empfangseinheit vorgesehen sind. Dabei ist die Handhabung der so ausgeführten Schnittstelle durch lediglich einen einzigen auszuführenden Handgriff denkbar einfach.

Die Empfangseinheit könnte in einer einfachen Ausführungsform eine geeignete Antenne sein. Eine besonders günstige Ausführungsform der Erfindung ist auch dadurch gegeben, dass die Empfangseinheit ein Mobiltelefon hat. Hierdurch können eine Vielzahl von aktuellen Informationen erfasst und in dem Datenspeicher zur weiteren Verwendung bereitgestellt werden. So ist beispielsweise eine auf den Aufenthaltsort abgestimmte Bereitstellung von Verkehrsdaten mittels des Mobiltelefons realisierbar. Insbesondere wirkt sich hierbei auch die stark steigende Verbreitung solcher Mobiltelefone aus, mittels derer nahezu unbegrenzt Daten zur Verfügung gestellt werden können. Insbesondere wird hierdurch auch der Austausch von Daten zwischen Fahrzeugen untereinander ermöglicht.

Eine weltweite, nahezu uneingeschränkte Bestimmung des Standortes mit dennoch hoher Genauigkeit wird bei einer Weiterbildung der Erfindung dadurch möglich, dass die Empfangseinheit einen GPS-Empfänger hat. Dieses satellitengestützte Positionierungssytem erlaubt einen weltweiten, frei zugänglichen Einsatz und ist somit optimal zur Ergänzung der in dem Datenspeicher enthaltenen Daten geeignet.

Besonders günstig ist auch eine Ausführungsform, wenn die Empfangseinheit ein Radioempfänger ist. Hierdurch können die in den meisten Fällen bereits im Fahrzeug vorhandenen Radioempfänger optimal an den Datenspeicher angebunden und beispielsweise die von den Radiostationen ausgestrahlten Verkehrshinweise gespeichert und ausgewertet werden. Durch die große Verbreitung von Radioempfängern in Fahrzeugen wird dabei zugleich eine kostengünstige Realisierung ermöglicht.

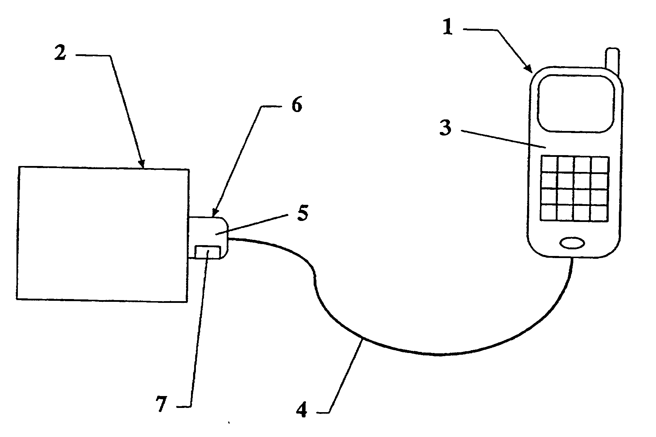

Die Erfindung lässt verschiedene Ausführungsformen zu. Zur weiteren Verdeutlichung ihres Grundprinzips ist eine davon in der Zeichnung dargestellt und wird nachfolgend beschrieben. Diese zeigt in einer Prinzipdarstellung die Anbindung einer Empfangseinheit 1 an einen Datenspeicher 2. Die als Mobiltelefon 3 ausgeführte Empfangseinheit 1 ist mittels einer elektrischen Kontaktierung 4 mit einer eine Steckverbindung 5 aufweisenden Schnittstelle 6 verbunden. Die Schnittstelle 6 hat als integralen Bestandteil eine Speichereinheit 7, die spezifische Daten des Mobiltelefons 3 enthält. Die mittels des Mobiltelefons 3 empfangenen Signale werden an den Datenspeicher 2 übermittelt, wobei zugleich auch die in der Speichereinheit 7 der Schnittstelle 6 vorhandenen und zur Decodierung der Signale erforderlichen Softwaremodule von dem Datenspeicher 2 erfasst werden. Ein fehlerhaftes Einstecken der Steckverbindung 5 wird dabei durch eine entsprechende konstruktive Ausgestaltung der Steckverbindung 5 vermieden. Nicht dargestellt sind die weiterhin mit dem Datenspeicher 2 verbundenen Bauelemente, die insbesondere eine Weiterverarbeitung der erfassten Daten und Umsetzung in benutzergerechte Informationen ermöglichen. Weiterhin können zusätzliche Empfangseinheiten an dem Datenspeicher 2 angeschlossen sein und die verfügbaren Daten sinnvoll ergänzen.

## Patentansprüche

1. Datenspeicher (2) in einem Fahrzeug, der mittels einer Schnittstelle (6) mit einer Empfangseinheit die derart Konstruktiv ausgestaltet ist, daß deren fehlarhaftes Einstechen vermieden wird für Funksignale verbunden ist, wobei die Schnittstelle (6) eine Speichereinheit (7) für spezifische Daten der Empfangseinheit (1) hat, **dadurch gekennzeichnet, dass** die Schnittstelle (6) mit einer Steckverbindung (5) ausgestattet ist, die derart Konstruktiv ausgestaltet ist, daß deren fehlerhaftes Einstechen vermieden wird.

2. Datenspeicher nach Anspruch 1, **dadurch gekennzeichnet, dass** die Schnittstelle (6) verschiedene Softwaremodule enthält.

3. Datenspeicher nach Anspruch 1 oder 2, **dadurch gekennzeichnet, dass** die Schnittstelle (6) elektronische Bauelemente aufweist, die zum Abgleich der Signale zwischen Empfangseinheit (1) und Datenspeicher (2) ausgeführt sind.

4. Datenspeicher nach zumindest einem der vorhergehenden Ansprüche, **dadurch gekennzeichnet, dass** die Schnittstelle (6) eine Recheneinheit hat.

5. Datenspeicher nach zumindest einem der vorhergehenden Ansprüche, **dadurch gekennzeichnet, dass** die Empfangseinheit (1) ein Mobiltelefon (3) hat.

6. Datenspeicher nach zumindest einem der vorhergehenden Ansprüche, **dadurch gekennzeichnet, dass** die Empfangseinheit (1) einen GPS-Empfänger hat.

7. Datenspeicher nach zumindest einem der vorhergehenden Ansprüche, **dadurch gekennzeichnet, dass** die Empfangseinheit (1) ein Radioempfänger ist.

## Claims

1. Data store (2) in a vehicle which (data store) is connected by means of an interpose (6) to a reception unit for radio signals which is designed such that it is prevented from being plugged in incorrectly, the interface (6) having a memory unit (7) for specific data from the reception unit (1), **characterized in that** the interface (6) is equipped with a plug connection (5) which is designed such that it is prevented from being plugged in incorrectly.

2. Data store according to Claim 1, **characterized in that** the interface (6) contains various software modules.

3. Data store according to Claim 1 or 2, **characterized in that** the interface (6) has electronic elements which are designed to align the signals between the reception unit (1) and the data store (2).

4. Data store according to at least one of the preceding claims, **characterized in that** the interface (6) has a processor.

5. Data store according to at least one of the preceding claims, **characterized in that** the reception unit (1) has a mobile telephone (3).

6. Data store according to at least one of the preceding claims, **characterized in that** the reception unit (1) has a GPS receiver.

7. Data store according to at least one the preceding claims, **characterized in that** the reception unit (1) is a radio receiver.

## Revendications

1. Mémoire de données (2) dans un véhicule, qui est reliée au moyen d'une interface (6) à une unité de réception (1) de signaux radio, l'interface (6) ayant une unité de mémoire (7) pour des données spécifiques à l'unité de réception (1), **caractérisée par le fait que** l'interface (6) est équipée d'un raccordement enfichable (5), dont la construction est conçue de telle sorte que son enfichage erroné est évité.

2. Mémoire de données selon la revendication 1 **caractérisée par le fait que** l'interface (6) renferme divers modules de logiciel.

3. Mémoire de d onnées selon la revendication 1 ou 2 **caractérisée par le fait que** l'interface (6) comporte des composants électroniques conçus pour accorder les signaux entre l'unité de réception (1) et la mémoire de données (2).

4. Mémoire de données selon au moins l'une des revendications précédentes **caractérisée par le fait que** l'interface (6) a une unité de calcul.

5. Mémoire de données selon au moins l'une des revendications précédentes **caractérisée par le fait que** l'unité de réception (1) a un téléphone mobile (3).

6. Mémoire de données selon au moins l'une des revendications précédentes **caractérisée par le fait que** l'unité de réception (1) a un récepteur GPS.

7. Mémoire de données selon au moins l'une des revendications précédentes **caractérisée par le fait que** l'unité de réception (1) a un récepteur radio.
